# EUROPÄISCHE PATENTSCHRIFT

(11) **EP 3 011 246 B1**
(45) Veröffentlichungstag und Bekanntmachung des Hinweises auf die Patenterteilung: **15.11.2017**
(21) Anmeldenummer: 14733985.7
(22) Anmeldetag: 24.05.2014
(51) Int. Cl.: F28C 3/06, F28C 3/08

(54) **VERFAHREN UND INJEKTOR ZUM EINLEITEN EINES DAMPFFÖRMIGEN WÄRMETRÄGERS IN EIN FLÜSSIGES PRODUKT**
METHOD AND INJECTOR FOR INTRODUCING A VAPOROUS HEAT CARRIER INTO A LIQUID PRODUCT
PROCÉDÉ ET INJECTEUR SERVANT À INTRODUIRE UN FLUIDE CALOPORTEUR SOUS FORME DE VAPEUR DANS UN PRODUIT LIQUIDE

(30) Priorität: 19.06.2013 DE 102013010296
(43) Veröffentlichungstag der Anmeldung: 27.04.2016
(73) Patentinhaber: GEA TDS GmbH, 31157 Sarstedt (DE)
(72) Erfinder: SCHMIED, Andreas, 48249 Dülmen (DE); GEHLING, Jürgen, 48703 Stadtlohn (DE); STOCKHORST, Stephan, 46414 Rhede (DE); SCHWENZOW, Uwe, 48683 Ahaus (DE); TACKE, Ludger, 46342 Velen (DE)
(74) Vertreter: Hauck Patentanwaltspartnerschaft mbB
(86) Internationale Anmeldenummer: PCT/EP2014/001411
(87) Internationale Veröffentlichungsnummer: WO 2014/202174

(56) Entgegenhaltungen:
- DE-A1-102007 017 704
- DE-A1-102009 006 248

## Beschreibung

### TECHNISCHES GEBIET

Die Erfindung betrifft ein Verfahren zum Einleiten eines dampfförmigen Wärmeträgers in ein flüssiges Produkt, insbesondere ein Nahrungsmittel oder Getränk, und hier insbesondere viskose Produkte, beispielsweise Desserts, Soßen oder Konzentrate, bei dem der dampfförmige Wärmeträger das flüssige Produkt zur Bildung eines keimfreien Produkts erhitzt und bei dem das Strömen entweder des dampfförmigen Wärmeträgers durch Druckabfall hervorgerufen wird, der durch die Geschwindigkeit des flüssigen Produkts entsteht, oder des flüssigen Produkts durch Druckabfall hervorgerufen wird, der durch die Geschwindigkeit des dampfförmigen Wärmeträgers entsteht, sowie mit den weiteren Merkmalen des Oberbegriffs des Anspruchs 1. Darüber hinaus ist Gegenstand der Erfindung ein Injektor mit den Merkmalen des Oberbegriffs den Anspruchs 4 zur Durchführung des Verfahrens.

### STAND DER TECHNIK

Im Hinblick auf die Wärmebehandlung eines flüssigen Produkts der vorg. Art kann qualitativ einwandfreier Wasserdampf von Trinkwasserqualität, vorzugsweise sog. kulinarischer Wasserdampf im Sättigungszustand, verwendet werden, um das flüssige Produkt schnell und effizient zu erwärmen. Eines der zum direkten Injizieren von Dampf in das flüssige Produkt angewendeten Verfahren besteht in der Verwendung eines Injektors. Infolge dieses schnellen Verfahrens kann die Behandlungszeit verringert werden, was insgesamt zu einer verringerten Wärmeeinwirkung auf das Produkt führt und wodurch ein Produkt erhalten wird, das vor allem im Hinblick auf den Geschmack ein höheres Qualitätsniveau behält. Die schnelle und schonende Wärmebehandlung beim direkten Erwärmungsverfahren wird um den Preis eines höheren Energieaufwandes gegenüber dem indirekten Erwärmungsverfahren, beispielsweise mittels Rohrbündel-Wärmeaustauscher, erkauft. Daher ist man bestrebt, die Wärmeübergangsbedingungen beim direkten Verfahren der in Rede stehenden Art weiter zu verbessern, was dann zwangsläufig zu einer geringeren erforderlichen Temperaturdifferenz zwischen dampfförmigem Wärmeträger und dem zu erwärmenden flüssigen Produkt führt und damit die schonende Behandlung des Produkts weiter begünstigt.

Ein Verfahren der gattungsgemäßen Art und ein Injektor zu seiner Durchführung sind aus der DE 10 2007 017 704 A1 bekannt. Das Verfahren und der Injektor betreffen allerdings nur eine Konstellation, bei der das Strömen des dampfförmigen Wärmeträgers durch Druckabfall hervorgerufen wird, der durch die Geschwindigkeit des flüssigen Produkts entsteht. Die vorliegende Erfindung soll sich mit Blick auf das Verfahren auch auf eine Konstellation erstrecken, bei der das Strömen des flüssigen Produkts durch Druckabfall hervorgerufen wird, der durch die Geschwindigkeit des dampfförmigen Wärmeträgers entsteht.

In der DE 10 2007 017 704 A1 ist bereits offenbart, dass die axiale Verschiebung des Verdrängerkörpers manuell oder motorisch vorgenommen wird. Die manuelle Verschiebung erfolgt beispielsweise über ein arretierbares (beispielsweise konterbares) Spindel-Mutter-System. Eine motorische Verschiebung kann beispielsweise über ein motorisch angetriebenes Spindel-Mutter-System erfolgen, wobei der Stellantrieb beispielsweise elektrisch, pneumatisch oder hydraulisch betrieben wird und die notwendige Drehbewegung der Spindel generiert.

Es ist hinlänglich bekannt, dass sich bei den bekannten Injektoren, bedingt durch die thermische Erhitzung des Produkts, mit der Produktionszeit und mit unterschiedlicher Intensität Produktablagerungen im Injektor, insbesondere an den mit dem Produkt in Berührung kommenden heißen Bauteilen, bilden können. Besonders kritisch ist hier der ringkanalförmige Mischraum, der zwischen dem dornförmigen Verdrängerkörper und dem diesen umgebenden produktbeaufschlagten Injektorgehäuse gebildet wird. Die radiale Erstreckung des Mischraumes bestimmt die Schichtdicke des zu erhitzenden Produkts und somit entscheidend auch die Wärmeeintrag- und Wärmeübergangsbedingungen vom dampfförmigen Wärmeträger in das Produkt.

Die Neigung zur Bildung von Ablagerungen ist produktspezifisch und zeigt sich besonders signifikant bei viskosen Produkten. Durch Ablagerungen auf den produktberührten Bauteilen verändern sich zwangsläufig die Produktgeschwindigkeit und der Wärmeeintrag im ringkanalförmigen Mischraum und die Wärmeübertragungsleistung des Injektors sinkt. Diese Veränderungen haben Rückwirkung auf die Temperatur und damit auf den Druck des dampfförmigen Wärmeträgers am Eintritt in den Injektor; beide Zustandsgrößen steigen an, wodurch die Neigung zur Bildung von Ablagerungen weiter ansteigt. Bei dem dampfförmigen Wärmeträger handelt es sich um Sattdampf oder um überhitzten Dampf.

Wird überhitzter Dampf verwendet, so kann in der Regel die Enthalpie des Dampfes, ausgehend vom Sattdampfgebiet, nicht vollständig in dem Injektor übertragen werden. Dafür reicht die Kondensationsstrecke innerhalb des ringkanalförmigen Mischraumes im Injektor nicht aus. Aus diesem Grund ergibt sich oft eine höhere Temperatur des Produkts am Ende einer dem Injektor nachgeordneten Heißhaltestrecke gegenüber dem Austritt aus dem Injektor. Dieser Mangel ist als sog. Nachverdampfung bekannt und unerwünscht.

Es ist Aufgabe der vorliegenden Erfindung, ein Verfahren der gattungsgemäßen Art und einen Injektor zu seiner Durchführung zu schaffen, mit denen den Nachteilen und Mängeln des Standes der Technik abgeholfen und insbesondere ein Absinken der Wärmeübertragungsleistung des Injektors über die gesamte Produktionszeit verhindert wird.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Ein Injektor zur Durchführung des erfindungsgemäßen Verfahrens ist durch die Merkmale des nebengeordneten Anspruchs 4 gekennzeichnet. Vorteilhafte Ausführungsformen des Injektors sind Gegenstand der zugeordneten Unteransprüche.

Der erfinderische Lösungsgedanke basiert auf der Erkenntnis, dass die radiale Erstreckung des ringkanalförmigen Mischraums des Injektors, die die Produktschichtdicke ausbildet und die Wärmeeintrag- und Wärmeübergangsbedingungen vom dampfförmigen Wärmeträger auf das zu erhitzende flüssige Produkt entscheidend beeinflusst und die wiederum signifikant von den Produktablagerungen verändert wird, als Stellgröße zur Steuerung und/oder Regelung der Wärmeübertragungsleistung herangezogen wird. Die besagte radiale Erstreckung kann durch axiale Verschiebung eines dornförmig ausgebildeten Verdrängerkörpers, der in an sich bekannter Weise im Bereich des Mischraumes, in Strömungsrichtung gesehen, konisch sich verjüngend ausgebildet ist und mit einem sich ebenfalls konisch sich verjüngenden Injektorgehäuse korrespondiert, das den Verdrängerkörper umschließt, verändert werden. Eine Verschiebung des Verdrängerkörpers in Strömungsrichtung bewirkt somit eine Reduzierung und eine Verschiebung entgegen der Strömungsrichtung bewirkt eine Vergrößerung der Durchtrittsquerschnitte des Mischraums.

Aufbauend auf dieser Erkenntnis besteht die Lösung der erfindungsgemäßen Aufgabe darin, dass als Indikatoren für die Bildung von Produktablagerungen drei im Betrieb des Injektors erfassbare physikalische Messgrößen in Frage kommen, von denen wenigstens eine erfasst wird, wobei in Abhängigkeit von einer oder mehreren dieser physikalischen Messgrößen eine automatisch gesteuerte axiale Verschiebung des Verdrängerkörpers in der Weise durchgeführt wird, dass die Wärmeübertragungsleistung von dem dampfförmigen Wärmeträger in das flüssige Produkt gleichbleibt.

Bei diesen physikalischen Messgrößen handelt es sich
- um eine von der Strömung im Injektor erzeugte und erzwungenen Schwingungsfrequenz des gesamten Injektors oder eines ausgewählten Teiles desselben oder
- um eine Temperaturdifferenz zwischen der Eintrittstemperatur des dampfförmigen Wärmeträgers am Eintritt in den und der Austrittstemperatur des erhitzten flüssigen Produkts am Austritt aus dem Injektor oder
- um eine Druckdifferenz zwischen dem Eintrittsdruck des dampfförmigen Wärmeträgers am Eintritt in den und dem Austrittsdruck des erhitzten flüssigen Produkts am Austritt aus dem Injektor.

Durch die erfindungsgemäß vorgeschlagenen verfahrenstechnischen Merkmale kann insbesondere bei viskosen Produkten die Produktschichtdicke in dem ringkanalförmigen Mischraum verändert und damit können die Produktgeschwindigkeit und die Wärmeeintrag- und Wärmeübergangsbedingungen entscheidend beeinflusst werden. So kann in besonders vorteilhafter und wirksamer Weise bei Konzentraten die Produktschichtdicke optimal so eingestellt werden, dass eine vollständige Kondensation des Sattdampfes erreicht wird. Durch die automatisierte axiale Verstellung des dornförmigen Verdrängerkörpers ist es möglich, die Produktschichtdicke während der Produktion in seiner radialen Erstreckung zu verstellen bzw. zu regulieren. Die Produktschichtdicke kann dadurch auch für jedes Produkt einzeln gezielt eingestellt und geregelt werden.

Nach einer nicht exakt vorhersehbaren Produktionszeit können sich, bedingt durch die thermische Erhitzung des Produkts, Produktablagerungen an den produktberührten Bauteilen des Injektors ergeben. Diese bewirken im weiteren zeitlichen Ablauf
- einen Anstieg der vorstehend genannten Temperaturdifferenz und
- einen Anstieg der von dieser Temperaturdifferenz abhängigen vorstehend genannten Druckdifferenz und
- ein Auftreten von erzwungenen Schwingungen des gesamten Injektors oder an Teilen desselben, denen man bislang im Stand der Technik keine Beachtung geschenkt und/oder deren ursächlichen Zusammenhang mit der Bildung von Produktablagerungen der in Rede stehenden Art die Fachwelt bislang nicht erkannt hat.

Das Auftreten von diesen erzwungenen Schwingungen durch sich im Injektor verändernde strömungsmechanische und thermische Bedingungen wird von der vorliegenden Erfindung explizit aufgegriffen und zur Steuerung bzw. Regelung der Wärmeübertragungsleistung genutzt. Dies geschieht dadurch, dass diese Schwingungen erfasst und zur Auslösung eines Signals zur automatisch gesteuerten bzw. geregelten Verschiebung des Verdrängerkörpers herangezogen werden. Dieser Aspekt der vorliegenden Erfindung stellt eine eigenständige Erfindung dar.

Das Signal, resultierend aus den Schwingungen und/oder der Temperatur- und/oder der Druckdifferenz, wird einer Steuereinheit zugeführt. Diese Steuereinheit verfährt nach Maßgabe eines in ihr hinterlegten Steuerprogramms den Verdrängerkörper axial in der Weise, dass er ein Stück weit aus der ringkanalförmigen Mischkammer herausgefahren wird, wodurch sich deren radiale Erstreckung, zeitlich begrenzt, vergrößert und zwangsläufig die Produktgeschwindigkeit entsprechend verringert. Dies führt dann zum Abtrag der Produktablagerungen, und die zur Steuerung bzw. Regelung herangezogene Messgröße verändert sich.

Werden die erzwungenen Schwingungen als Stell- bzw. Regelgröße herangezogen, dann klingen diese ab. Die Verstellung des Verdrängerkörpers wird dabei beispielsweise mit einer Genauigkeit von 0,1 mm präzise gesteuert bzw. geregelt. Der Verdrängerkörper kann nach diesem begrenzten Zeitraum alsdann wieder in seine Ausgangslage zurückgeführt werden und der vorstehend beschriebene Steuerungs- bzw. Regelungszyklus kann erneut beginnen, wodurch sich eine längere kontinuierliche Produktionszeit ergibt.

Alternativ oder ergänzend zur Verwendung der Schwingungsfrequenz als Regel- oder Steuerungsgröße wird auch vorgeschlagen, die vorstehend beschriebene Temperaturdifferenz heranzuziehen. Bei laufender Produktion wird diese Temperaturdifferenz gemessen. Der Anstieg der Temperaturdifferenz deutet auf die wachsenden Produktablagerungen im Injektor hin. Bei steigender Temperaturdifferenz steigt auch die Temperatur des dampfförmigen Wärmeträgers. Wird nun während der Produktion, zeitlich begrenzt, die radiale Erstreckung des ringkanalförmigen Mischraumes vergrößert, was eine Änderung der Produktgeschwindigkeit zur Folge hat, indem der Verdrängerkörper automatisch ausgefahren wird, so kann der dampfförmige Wärmeträger leichter in das Produkt eindringen. Das führt zur Druckabsenkung auf der Dampfseite und damit wiederum zu einer niedrigeren Dampftemperatur. Je niedriger die Dampftemperatur ist, umso weniger Produktablagerungen bilden sich.

Alternativ oder ergänzend zur Verwendung der Schwingungsfrequenz als Regel- oder Steuerungsgröße wird auch vorgeschlagen, die vorstehend beschriebene Druckdifferenz heranzuziehen. Bei laufender Produktion wird diese Druckdifferenz gemessen. Der Anstieg der Druckdifferenz deutet ebenfalls auf Produktablagerungen im Injektor hin. Auch hier wird der Verdrängerkörper automatisch ausgefahren, der Dampfdruck wird dadurch abgesenkt, wodurch sich die Druckdifferenz verringert. Damit wird zwangsläufig die Temperaturdifferenz verringert und die Produktablagerungen werden reduziert bzw. minimiert.

Bei Erhitzungsanlagen für Trockentürme ist die Produktleistung am Anfang der Produktion deutlich niedriger als die Nennleistung der Trocknungsanlage. Auch hier kann die erfindungsgemäße Verstellung des Verdrängerkörpers dafür sorgen, dass trotz veränderter Leistung die Erhitzungsleistung im Injektor gleichbleibt. Diese Maßnahme sichert die Kondensationsprozesse und die kontinuierliche Produktionszeit.

Für jede Rezeptur können produktspezifische Parameter im Steuerprogramm hinterlegt werden. So kann vollautomatisch die notwendige Verstellung des Verdrängerkörpers auf einzelne Produkte abgestimmt und die vorher festgelegten Abhängigkeiten können während der gesamten Produktionszeit eingehalten werden.

Wird der Injektor mit überhitztem Dampf betrieben, so kann in der Regel die Enthalpie des Dampfes, ausgehend vom Sattdampfgebiet, nicht vollständig in dem Injektor übertragen werden. Dafür reicht die Kondensationsstrecke innerhalb des Injektors meist nicht aus. Aus diesem Grund ergibt sich oft eine höhere Temperatur am Austritt einer dem Injektor nachgeordneten Heißhaltestrecke gegenüber der Austrittstemperatur des erhitzten flüssigen Produkts am Austritt aus dem Injektor. Diesem Mangel wird, wie dies die Erfindung vorsieht, dadurch abgeholfen, dass die vorstehend beschriebene automatisch gesteuerte Verschiebung des Verdrängerkörpers durchgeführt wird, wenn die Temperatur am Austritt der Heißhaltestrecke gegenüber der Austrittstemperatur des erhitzten flüssigen Produkts am Austritt aus dem Injektor um eine vorgegebene zulässige Temperaturdifferenz, beispielsweise 1°C, überschritten ist. Dieser Eingriff hilft, die Temperaturdifferenz zu reduzieren.

Die Erfindung schlägt weiterhin vor, dass sich die Erhitzung des flüssigen Produkts durch den dampfförmigen Wärmeträger in mehr als einem Mischraum, die in Strömungsrichtung in Reihe geschaltet sind, erfolgt. Dies bedeutet, dass das erfindungsgemäße Verfahren auch auf mehrstufige Injektoren Anwendung finden kann.

Ein zur Durchführung des erfindungsgemäßen Verfahrens in der im Anspruch 1 mit (a) bezeichneten Konstellation im Grundsatz geeigneter Injektor ist aus der DE 10 2007 017 704 A1 bekannt, weil dort bereits eine motorische Verstellung des Verdrängerkörpers vorgesehen ist. Die Erfindung sieht vor, ausgehend von einem Injektor dieser Art, dass der Verdrängerkörper über eine Verstellstange mit einem Stellantrieb verbunden ist, dass eine Steuereinheit vorgesehen ist, in der die physikalischen Messgrößen Schwingungsfrequenz und/oder Temperaturdifferenz und/oder Druckdifferenz gespeichert werden und in der ein Steuerprogramm hinterlegt ist. Die Steuereinheit nimmt über den Stellantrieb eine automatisch gesteuerte bzw. geregelte axiale Verstellbewegung der Verstellstange nach Vorgabe durch das Steuerprogramm und in Abhängigkeit von einer oder mehreren der physikalischen Messgrößen vor.

Nach einer bevorzugten Ausführungsform ist ein Schwingungssensor unmittelbar oder mittelbar am Injektorgehäuse angeordnet. Da sich in signifikanter Weise die durch die Produktablagerungen bedingten erzwungenen Schwingungen am dornförmigen Verdrängerkörper ausprägen, ist vorgesehen, dass der Schwingungssensor in unmittelbarer oder mittelbarer Verbindung zur Verstellstange steht.

Die Produktablagerungen lösen sich leichter von den produktbeaufschlagten Bauteilen des Injektors bei gleichzeitig hoher Temperatur- und Reinigungsmittelbeständigkeit, wenn diese Bauteile aus Polyether Ether Ketone (PEEK) bestehen.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens und in Gestalt eines einstufigen und eines mehrstufigen Injektors zu seiner Durchführung realisiert ist, werden in der Zeichnung bevorzugte Ausführungsformen der beiden Injektoren zur Durchführung bevorzugter Ausgestaltungen des Verfahrens beschrieben. Es zeigen
- **Figur 1**: einen Meridianschnitt durch einen einstufigen Injektor gemäß der Erfindung;
- **Figur 2**: in perspektivischer Darstellung einen in seiner Meridianebene aufgeschnittenen mehrstufigen Injektor gemäß der Erfindung und
- **Figur 3**: einen Meridianschnitt durch den Injektor gemäß **Figur 2** (Blickrichtung senkrecht auf die Schnittebene der Figur 2).

### BESCHREIBUNG

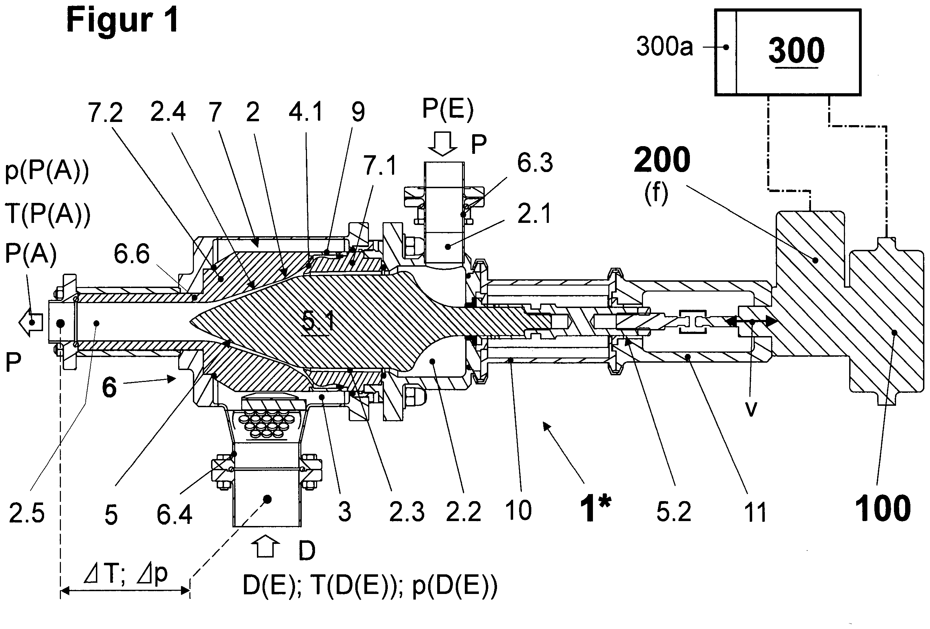

### Einstufiger Injektor (Figur 1)

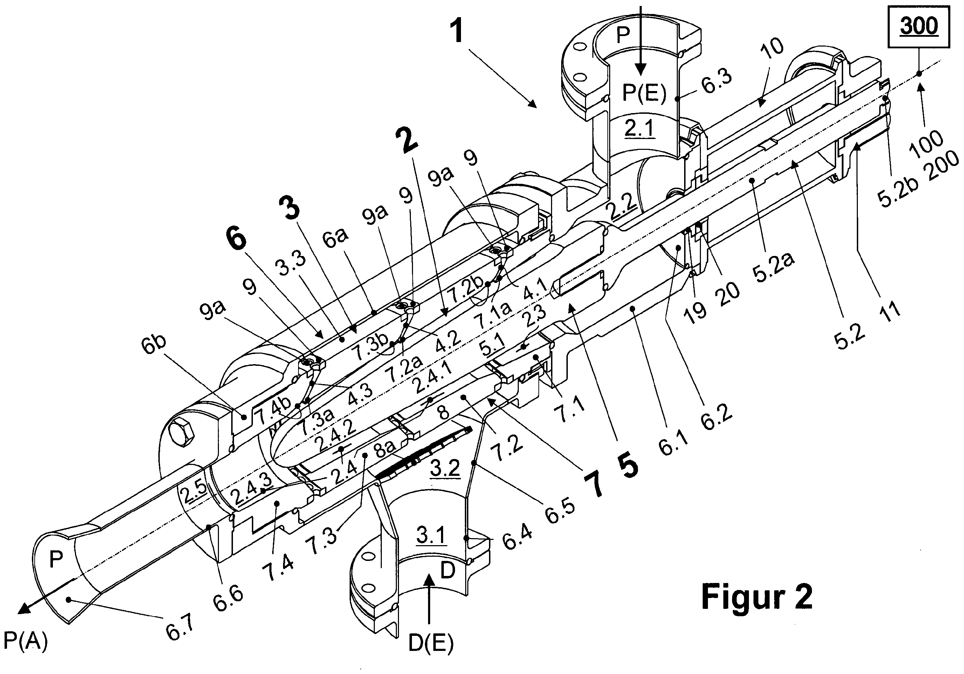

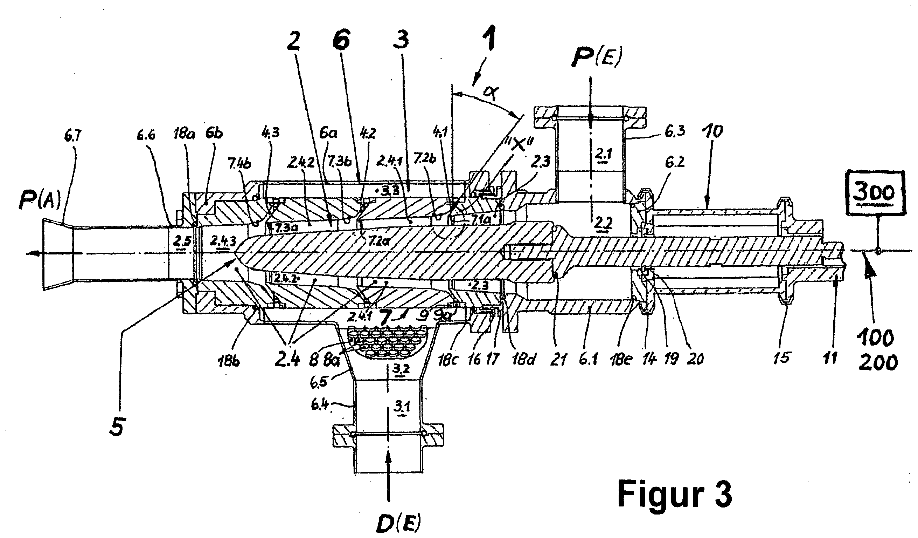

Die grundsätzliche Wirkungsweise eines Injektors der gattungsgemäßen Art wird zunächst anhand eines einstufigen Injektors 1* gemäß **Figur 1** beschrieben. Einzelheiten in seinem Aufbau, die dort zwar gezeigt, nicht aber bezeichnet und beschrieben sind, lassen sich der Beschreibung zu einem mehrstufigen Injektor 1 nach den Figuren 2 und 3 entnehmen. Die Bezugszeichen und die zugeordneten Bezeichnungen werden in allen Figuren einheitlich verwendet.

Ein flüssiges Produkt P strömt, auf die Zeichnungslage bezogen, von oben senkrecht einem an einem Injektorgehäuse 6 zentrisch angeordneten ersten Einlass 6.3 (Dom) mit einem Produkteintritt P(E) zu und gelangt über einen zylindrischen ersten Eintrittsraum 2.1 in den rückwertigen Raum des Injektors 1*, eine Eintrittskammer 2.2, wo es über deren Umfang gleichmäßig verteilt und von dort einem ersten Beaufschlagungsraum 2 zugeführt wird. Eine gleichmäßige Produktschichtung erfolgt in einem Ringspalt, einem inneren ersten Ringraum 2.3, der zwischen einem Verdrängerkörper 5.1 eines Dorns 5 und einem den Verdrängerkörper 5.1 umgrenzenden, produktseitigen ersten Gehäusering 7.1 eines inneren Gehäuses 7 gebildet ist. Der innere erste Ringraum 2.3 ist Teil des ersten Beaufschlagungsraumes 2. Letzterer wird zwischen dem Verdrängerkörper 5.1 und dem inneren Gehäuse 7, bestehend aus dem ersten Gehäusering 7.1 und einem zweiten Gehäusering 7.2, und zwar auf dessen gesamter axialer Länge, ausgebildet. Das Produkt P verlässt auf seinem weiteren Strömungsweg den inneren ersten Ringraum 2.3 und gelangt in einen ringkanalförmigen Mischraums 2.4. Der Mischraum 2.4 beginnt, in Strömungsrichtung gesehen, im Bereich vom Übergang der zylinderförmigen zur konischen Ausführung des Verdrängerkörpers 5.1.

In dem Mischraum 2.4 trifft ein dampfförmiger Wärmeträger D, vorzugsweise Sattdampf, auf das flüssige Produkt P, wobei das Strömen des dampfförmigen Wärmeträgers D durch Druckabfall hervorgerufen wird, der durch die Geschwindigkeit des flüssigen Produkts P beim Übergang vom düsenförmig verjüngten inneren ersten Ringraum 2.3 in den ringkanalförmigen Mischraumes 2.4 entsteht. Der dampfförmige Wärmeträger D gelangt in diesen Bereich, wenn er an einem Dampfeintritt D(E) über einen zweiten Einlass 6.4 in einen zweiten Beaufschlagungsraum 3, der den ersten Beaufschlagungsraum 2 konzentrisch umgibt, eintritt und von dort über einen Verteilerring 9 innerhalb des inneren Gehäuses 7 den Mischraum 2.4 umfänglich von außen über eine (erste) Ringdüse 4.1 beaufschlagt.

Im Mischraum 2.4 kommt es zu einer effektiven Vermischung des flüssigen Produkts P mit dem dampfförmigen Wärmeträger D bei gleichzeitiger Kondensation des dampfförmigen Wärmeträgers D, und das zu erhitzende flüssige Produkt P wird dort prozessbedingt beschleunigt, wodurch die Vermischung forciert wird. Der konisch sich verjüngende Mischraum 2.4 mündet in einen zylindrischen Austrittsraum 2.5, eine sog. Kondensationsstrecke, ein und führt dieser das Zweiphasengemisch aus flüssigem Produkt P und noch nicht kondensiertem dampfförmigen Wärmeträger D zu. Das erhitzte flüssige Produkt P verlässt an einem durch einen Auslass 6.6 gebildeten Produktaustritt P(A) den zylindrischen Austrittsraum 2.5, der vorzugsweise als ein Stück gerades Rohr ausgebildet ist. Als Werkstoff für den zylindrischen Austrittsraum 2.5, wie auch für andere mit dem heißen Produkt P in Kontakt kommende Bauteile des Injektors 1*, wird vorzugsweiseaus Polyether Ether Ketone (PEEK) verwendet. Dieser Werkstoff reduziert durch seine speziellen Eigenschaften die Neigung zu Produktablagerungen und -anbrennungen und ist nachweislich temperatur- und reinigungsmittelbeständig.

Der Dorn 5 besteht einerseits aus dem vor dem zylindrischen Austrittsraum 2.5 endenden Verdrängerkörper 5.1 und andererseits aus einer an dem Verdrängerkörper 5.1 angeformten Verstellstange 5.2. Diese ist unmittelbar oder über eine mit ihr form- und/oder kraftschlüssig verbundene Verlängerung durch ein mit dem Injektorgehäuse 6 fest verbundenes Laternengehäuse 10 und ein sich diesem anschließendes Befestigungsteil 11 hindurchgeführt und mit einem Stellantrieb 100 verbunden, der an dem Befestigungsteil 11 gehaltert ist. Mit Hilfe des Stellantriebs 100 können die Verstellstange 5.2 und damit der Verdrängerkörper 5.1 in axialer Richtung um eine Verstellbewegung v verfahren werden. Mit dieser Verstellbewegung v kann der Verdrängerkörper 5.1 sehr feinfühlig, beispielsweise mit einer Genauigkeit von 0,1 mm, in den Mischraum 2.4 hinein- oder aus diesem herausgefahren werden.

Unmittelbar am Injektorgehäuse 6 oder, wie im Ausführungsbeispiel dargestellt, mittelbar am Injektorgehäuse 6, und zwar vorzugsweise im Verbindungsbereich des Befestigungsteils 11 mit dem Stellantrieb 100, ist ein Schwingungssensor 200 angeordnet, mit dem am oder im Injektor 1* auftretende Schwingungen, beispielsweise deren Schwingungsfrequenz f, erfasst werden. Die Anordnung kann zweckmäßig so getroffen werden, dass der Schwingungssensor 200 in unmittelbarer oder mittelbarer Verbindung zur Verstellstange 5.2 steht, an der sich durch die Strömung und die thermischen Bedingungen im Injektor 1* angeregte erzwungene Schwingungen in besonderer Weise ausprägen. Dieser Schwingungssensor 200 kann beispielsweise auch als Vibrationsschalter ausgeführt sein, der lediglich feststellt, ob Schwingungen (Vibrationen) auftreten, und der bei Überschreiten und Unterschreiten einer vorgegebenen Amplitude jeweils ein Schaltsignal generiert. Schwingungssensor 200 und Stellantrieb 100 sind mit einer Steuereinheit 300 verbunden, in der ein Steuerprogramm 300a hinterlegt ist. In diesem Steuerprogramm 300a sind produktspezifische Parameter zur Steuerung bzw. Regelung der Verstellbewegung v hinterlegt, mit denen die axiale Verschiebung des Verdrängerkörpers 5.1 automatisch so gesteuert bzw. geregelt werden kann, dass die Wärmeübertragungsleistung von dem dampfförmigen Wärmeträger D in das flüssige Produkt P gleichbleibt.

Weiterhin ist vorgesehen, dass eine Temperaturdifferenz ΔT und/oder eine Druckdifferenz Δp zwischen dem zweiten Einlass 6.4 und dem Produktauslass P(A) gemessen und ebenso wie die Informationen zu den Schwingungen, generiert über den Schwingungssensor 200, der Steuereinheit 300 zugeführt wird bzw. werden.

### Mehrstufiger Injektor (Figuren 2 und 3)

Ein mehrstufiger Injektor 1 (nachfolgend wird jeweils auf die geeignetste der **Figuren 2** oder **3** Bezug genommen und Lageangaben beziehen sich auf die Darstellungslage des Injektors 1) wird außenseits von einem rohrförmigen Injektorgehäuse 6 begrenzt, das mit einem zylindrischen Mantelteil 6a ein ringförmiges inneres Gehäuse 7 konzentrisch umschließt, letzteres links- und stirnseitig mit einem Kragenteil 6b teilweise umgreift und rechtsseitig in einem nicht näher bezeichneten Flansch endet, der innenseits im Bereich des rechtsseitigen Endes des inneren Gehäuses 7 gegenüber letzterem über eine dritte Gehäusedichtung 18c radial abgedichtet ist (**Figur 3**). Zwischen der äußeren Mantelfläche des inneren Gehäuses 7 und dem Mantelteil 6a ist ein äußerer Ringraum 3.3 ausgebildet, der Teil eines zweiten Beaufschlagungsraumes 3 zur Bereitstellung und Verteilung eines dampfförmigen Wärmeträgers D ist. Bei diesem handelt es sich insbesondere um Wasserdampf, vorzugsweise um sog. kulinarischen Wasserdampf im Sättigungszustand (Sattdampf)), der dem zweiten Beaufschlagungsraum 3, ausgehend von einem Dampfeintritt D(E), über einen zweiten Einlass 6.4, der innenseits einen vorzugsweise zylindrischen zweiten Eintrittsraum 3.1 ausbildet, und einen sich fluchtend anschließenden vorzugsweise konischen Erweiterungsstutzen 6.5, der innenseits einen entsprechend konisch erweiterten Raum 3.2 ausbildet, zugeführt wird. Die Längsachse des Erweiterungsstutzens 6.5 mündet ein Stück rechts von der Mitte der axialen Länge des zweiten Beaufschlagungsraumes 3 in letzteren ein. Der zweite Beaufschlagungsraum 3 ist an seinem linksseitigen Ende über eine zweite Gehäusedichtung 18b, die zwischen dem Injektorgehäuse 6 und dem inneren Gehäuse 7 axial/radial eingespannt ist, nach außen abgedichtet. Das rechtsseitige Ende des inneren Gehäuses 7 ragt ein Stück über die rechtsseitige Stirnfläche des Flansches am Injektorgehäuse 6 hinaus und ist dort stirnseitig gegen ein Eintrittsgehäuse 6.1 über eine vierte Gehäusedichtung 18d axial abgedichtet. Das Eintrittsgehäuse 6.1 bildet an der Abdichtungsstelle mit dem inneren Gehäuse 7 einen nicht näher bezeichneten Flansch aus, der mit dem korrespondierenden Flansch am Injektorgehäuse 6 verschraubt ist.

In das ringförmige innere Gehäuse 7 greift von rechts ein in axialer Richtung verschieblicher Dorn 5 ein, der in seinem linksseitigen Teil in Form eines überwiegend konusförmigen, zum linksseitigen Ende sich verjüngenden, rotationssymmetrischen Verdrängerkörpers 5.1 ausgebildet ist (**Figur 2**). Zwischen dem Verdrängerkörper 5.1 und dem letzteren umschließenden ringförmigen inneren Gehäuse 7 wird ein ringkanalförmiger Mischraum 2.4 gebildet, der Teil eines ersten Beaufschlagungsraumes 2 für ein flüssiges Produkt P ist. An den Mischraum 2.4 schließt sich rechtsseitig ein zwischen dem rechtsseitigen Ende des inneren Gehäuses 7 und dem Verdrängerkörper 5.1 gebildeter innerer erster Ringraum 2.3 an, der gleichfalls Teil des ersten Beaufschlagungsraumes 2 ist, sich düsenförmig in Richtung des Mischraumes 2.4 verjüngt und mit einer im Eintrittsgehäuse 6.1 ausgebildeten Eintrittskammer 2.2 unmittelbar verbunden ist. Das Eintrittsgehäuse 6.1 besitzt einen ersten Einlass 6.3 für die Zufuhr des flüssigen Produkts P, der innenseits vorzugsweise einen zylindrischen ersten Eintrittsraum 2.1 ausbildet, wobei letzterer mit der Eintrittskammer 2.2 unmittelbar verbunden ist. Ein Produkteintritt P(E) in den ersten Beaufschlagungsraum 2 erfolgt somit am ersten Einlass 6.3 und das flüssige Produkt P gelangt anschließend über den Eintrittsraum 2.1, die sich anschließende Eintrittskammer 2.2, den düsenartig verjüngten inneren ersten Ringraum 2.3 in den ringförmigen Mischraum 2.4, um diesen über einen vorzugsweise zylindrisch ausgeführten Austrittsraum 2.5, der in einem sich linksseitig an das Kragenteil 6b anschließenden Auslass 6.6 ausgebildet ist, zu verlassen. Der Austrittsraum 2.5 verlängert sich in ein vorzugsweise durchmessergleiches Rohrstück, das als sog. Kondensationsstrecke dient. Die Kondensationsstrecke mündet in eine Rohrerweiterung 6.7 aus, über die ein Produktaustritt P(A) in eine abführende Rohrleitung einer nachgeordneten Prozessanlage erfolgt.

Ein am Auslass 6.6 ausgebildeter, nicht näher bezeichneter Flansch ist mit dem Kragenteil 6b vorzugsweise verschraubt und dieser Flansch ist gegen eine korrespondierende stirnseitigen Begrenzungsfläche des inneren Gehäuses 7 über eine erste Gehäusedichtung 18a axial abgedichtet. Der Kragenteil 6b ist somit zwischen dem Flansch am Auslass 6.6 und dem innerem Gehäuse 7 sowohl axial als auch radial formschlüssig festgelegt und die gesamte Aggregation, bestehend aus den Teilen 6, 6.6 mit 6.7, 7 und 6.1 mit 6.3, wird durch die Schraubverbindung zwischen dem Flansch am Injektorgehäuse 6 und dem Flansch am Eintrittsgehäuse 6.1 zusammengehalten, in sich verspannt und an den erwähnten Abdichtungsstellen 18a bis 18d nach außen gedichtet.

Eine erste Spannbuchse 16 greift von rechts in die Bohrung im Flansch am Injektorgehäuse 6 ein, kontaktiert an ihrem dortigen Ende die dritte Gehäusedichtung 18c und umfasst mit einem Bund den Flansch am Injektorgehäuse 6. Die erste Spannbuchse 16 ist innenseits mit einer zweiten Spannbuchse 17 verschraubt, wobei letztere an ihrem rechtsseitigen Ende mit einem nicht bezeichneten Kragen in eine nicht bezeichnete nutförmige Ausnehmung zwischen der Stirnfläche des inneren Gehäuses 7 und dem Flansch am Eintrittsgehäuse 6.1 radial nach innen formschlüssig eingreift. Mit dieser Spannbuchsenanordnung 16/17 lassen sich im Zusammenwirken mit der Verschraubung zwischen dem Flansch am Injektorgehäuse 6 und dem Flansch am Eintrittsgehäuse 6.1 der Anpressdruck der Gehäusedichtungen 18a, 18b und 18c sowie der axiale Anpressdruck zwischen den nachstehend noch beschriebenen Gehäuseringen, aus denen das innere Gehäuse 7 zweckmäßig zusammengesetzt ist, einstellen. Darüber hinaus zentriert der Kragen an der zweiten Spannbuchse 17 das Eintrittsgehäuse 6.1 gegenüber dem inneren Gehäuse 7, wobei das Eintrittsgehäuse 6.1 unter Einschluss der vierten Gehäusedichtung 18d metallisch am inneren Gehäuse 7 anliegt.

Der erste Beaufschlagungsraum 2 findet am rechtsseitigen Ende des Eintrittsgehäuses 6.1 seinen Abschluss über einen Deckel 6.2, der über eine fünfte Gehäusedichtung 18e in einer Öffnung im Eintrittsgehäuse 6.1 abgedichtet und dort vorzugsweise über einen nicht näher bezeichneten Klemmflansch an einem Laternengehäuse 10 mittels eines ersten Spannringes 14 form- und kraftschlüssig festgelegt ist. In den Verdrängerkörper 5.1 ist rechtsseitig eine Verstellstange 5.2 eingeschraubt, die an der Verschraubungsstelle mittels einer Dichtung 21 gegen den Verdrängerkörper 5.1 abgedichtet ist. Die Verstellstange 5.2 besteht in ihrem linksseitigen Teil aus einer durchmessergrößeren Führungsstange 5.2a und in ihrem rechtsseitigen Teil aus einer durchmesserkleineren Befestigungsstange 5.2b (**Figur 2**). Die Führungsstange 5.2a durchdringt den Deckel 6.2 und den Flansch am Laternengehäuse 10 über eine Stangendichtung 19 und einen sich anschließenden Führungsring 20. An das Laternengehäuse 10 ist rechtsseitig ein Befestigungsteil 11 angeflanscht, wobei diese Verbindung mit einem zweiten Spannring 15, ähnlich jener zwischen Deckel 6.2 und Laternengehäuse 10, ausgebildet ist. Die Verstellstange 5.2 ist mit der Befestigungsstange 5.2b mit dem Stellantrieb 100 verbunden, wie dies in **Figur 1** dargestellt ist. Durch diese Anordnung ist der Dorn 5 in die notwendige axiale Lage im Mischraum 2.4 motorisch zu verschieben und schließlich unverrückbar festzulegen. Bei dem Stellantrieb 100 kann es sich um einen elektrisch, pneumatisch oder hydraulisch arbeitenden Aktor, der eine rotative oder translatorische Verstellbewegung ursächlich generiert, handeln. Die Anordnung eines Schwingungssensors 200 und einer Steuereinheit 300 mit einem dort hinterlegten Steuerprogramm 300a wurde in **Figur 1** dargestellt und beschrieben. Die dortigen Ausführungen sind sinngemäß auch auf den mehrstufigen Injektor 1 zu übertragen. Dies betrifft auch die Verstellstange 5.2, die in gleicher Weise, wie in Figur 1 dargestellt, ausgeführt sein kann.

Im ringförmigen inneren Gehäuse 7 ist am rechtsseitigen Ende eine erste Ringdüse 4.1 ausgebildet, die radial außenseits mit dem äußeren Ringraum 3.3 des zweiten Beaufschlagungsraumes 3 verbunden ist und die radial innenseits über eine nicht bezeichnete ringspaltförmige erste Austrittsöffnung in den Mischraum 2.4 ausmündet. Über diese erste Ringdüse 4.1 wird der dampfförmige Wärmeträger D, von dem Dampfeintritt D(E) kommend, von dem aus dem düsenartig ausgebildeten inneren ersten Ringraum 2.3 austretenden, als Treibstrahl fungierenden Strom des flüssigen Produkts P, das über den Produkteintritt P(E) herangeführt wird, angesaugt. Die Ansaugung wird durch einen Druckabfall im flüssigen Produkt P erzeugt, der durch Geschwindigkeitserhöhung im Durchtrittsquerschnitt des Mischraumes 2.4 im Bereich der ringspaltförmigen ersten Austrittsöffnung generiert wird. Der düsenartig ausgebildete innere erste Ringraum 2.3 erzeugt im Bereich der ringspaltförmigen ersten Austrittsöffnung generell eine diesbezügliche Geschwindigkeitserhöhung, die durch eine besondere Maßnahme im Austrittsende des inneren ersten Ringraums 2.3 deutlich verstärkt wird. Diese Maßnahme besteht darin, dass am inneren Gehäuse 7 bzw. am ersten Gehäusering 7.1, in Strömungsrichtung des flüssigen Produkts P gesehen, unmittelbar vor der ringspaltförmigen ersten Austrittsöffnung eine ringförmige erste Nase 7.1a ausgebildet ist, die dort einen ersten Durchtrittsquerschnitt radial außenseits derart einschnürt, dass dieser, in Strömungsrichtung des flüssigen Produkts P gesehen, gegenüber dem vorgeordneten Durchtrittsquerschnitt des inneren Ringraumes 2.3 verkleinert ist. Der gleiche Aufbau in diesem Bereich ist auch beim einstufigen Injektor 1* gemäß Figur 1 realisiert.

Die ringförmige erste Nase 7.1a und auch z.B. weitere Nasen 7.2a, 7.3a bei weiteren stromabwärts angeordneten Ringdüsen 4.2, 4.3 zwingen den ringförmigen Treibstrahl (flüssiges Produkt P) im Bereich der jeweiligen ringspaltförmigen Austrittsöffnung in eine Strömungsform, deren Strömungsquerschnitt, bezogen auf eine durch die Längsachse des Mischraumes 2.4 verlaufende Ebene, in radialer Richtung eine Erstreckung aufweist, die klein gegenüber einer orthogonalen zweiten Richtung ist, wobei letztere im Wesentlichen mit der Strömungsrichtung des flüssigen Produkts P übereinstimmt.

Die ringspaltförmige erste Austrittsöffnung mündet von der Seite des umschließenden inneren Gehäuses 7, von radial außenseits, unter einem Neigungswinkel α gleichsinnig zur Strömungsrichtung des flüssigen Produkts P in den Mischraum 2.4 ein. Er wird gegen die Senkrechte auf die Längsachse des Mischraumes 2.4 gemessen, wobei es sich als vorteilhaft erwiesen hat, wenn für den Neigungswinkel α ein Wert im Bereich 30 bis 45 Grad, bevorzugt ein Wert von 35 Grad, vorgesehen ist.

Bezogen auf die Strömungsrichtung des flüssigen Produkts P geht die stromabwärtsseitige Begrenzungsfläche der ringspaltförmigen ersten Austrittsöffnung in eine umlaufende erste Anschrägung 7.2b am inneren Gehäuse 7 über, wobei die erste Anschrägung 7.2b eine größere Neigung gegen die Längsachse des Mischraumes 2.4 besitzt als die sich an die erste Anschrägung 7.2b anschließende Begrenzungsfläche des inneren Gehäuses 7. Der Übergang zwischen der stromabwärtsseitigen Begrenzungsfläche der ringspaltförmigen ersten Austrittsöffnung und der zugeordneten ersten Anschrägung 7.2b ist mit einem relativ großen Radius abgerundet.

Die in den **Figuren 2** und **3** dargestellte Ausführungsform des erfindungsgemäßen Injektors 1 weist, in Strömungsrichtung des flüssigen Produkts P gesehen, hinter der ersten Ringdüse 4.1 zwei weitere Ringdüsen 4.2 und 4.3 auf, die dampfförmigen Wärmeträger D aus dem äußeren Ringraum 3.3 des zweiten Beaufschlagungsraumes 3 in den unverzweigt bleibenden Strom des flüssigen Produkts P jeweils unter dem Neigungswinkel α einbringen. Das Umfeld der zweiten Ringdüse 4.2 und der dritten Ringdüse 4.3 ist jeweils identisch zur ersten Ringdüse 4.1 ausgebildet, wobei dieser vorstehend beschriebene Bereich der Ringdüse 4.1 in Figur 3 mit "X" gekennzeichnet ist. Dies bezieht sich auf eine ringspaltförmige zweite Austrittsöffnung, eine ringförmige zweite Nase 7.2a sowie eine umlaufende zweite Anschrägung 7.3b im Zusammenhang mit der zweiten Ringdüse 4.2 und auf eine ringspaltförmige dritte Austrittsöffnung, eine ringförmige dritte Nase 7.3a sowie eine umlaufende dritte Anschrägung 7.4b im Zusammenhang mit der dritten Ringdüse 4.3. Die ringförmige zweite Nase 7.2a bildet dabei unmittelbar vor Eintritt in den Mischraum 2.4 einen zweiten Durchtrittsquerschnitt und die ringförmige dritte Nase 7.3a bildet einen entsprechenden dritten Durchtrittsquerschnitt aus, der jeweils an der jeweiligen Stelle den Mischraum 2.4 derart einschnürt, dass dieser, in Strömungsrichtung des flüssigen Produkts P gesehen, gegenüber dem jeweils vorgeordneten Durchtrittsquerschnitt des Mischraumes 2.4 verkleinert ist.

Das ringförmige innere Gehäuse 7 (**Figur 2**) besteht aus separaten Gehäuseringen 7.1, 7.2, 7.3, 7.4, die, in Strömungsrichtung des flüssigen Produkts P gesehen, aneinandergereiht und über jeweils einen Verteilerring 9 im Bereich der jeweiligen Ringdüse 4.1, 4.2, 4.3 axial voneinander beabstandet sind, wobei die jeweilige innere Begrenzungsfläche der Gehäuseringen 7.1, 7.2, 7.3, 7.4 kegelstumpfförmig ausgebildet ist. Die jeweilige axiale Beabstandung der Gehäuseringe 7.1, 7.2, 7.3, 7.4 erzeugt jeweils einen umlaufenden Ringspalt, der die jeweilige Ringdüse 4.1, 4.2, 4.3 bildet.

Im ersten Gehäusering 7.1 ist im Zusammenwirken mit einem vorzugsweise zylindrisch ausgeführten Abschnitt des Verdrängerkörpers 5.1 der düsenförmige innere erste Ringraum 2.3 ausgebildet, während der zweite Gehäusering 7.2, der dritte Gehäusering 7.3 und der vierte Gehäusering 7.4, in Strömungsrichtung des flüssigen Produkts P gesehen und jeweils im Zusammenwirken mit dem sich hinter der ersten Ringdüse 4.1 und näherungsweise parallel zur inneren kegelstumpfförmigen Begrenzungsfläche des jeweils zugeordneten Gehäuserings 7.2 bis 7.3 verjüngenden Verdrängerkörpers 5.1, innenseits einen inneren zweiten Ringraum 2.4.1 bzw. einen inneren dritten Ringraum 2.4.2 bzw. eine Austrittskammer 2.4.3 ausbilden, die zusammen den Mischraum 2.4 bilden. Durch die vorstehend beschriebene Ausgestaltung des ersten Beaufschlagungsraumes 2 in seinem von dem Verdrängerkörper 5.1 durchdrungenen Erstreckungsbereich verjüngt sich, in Strömungsrichtung des flüssigen Produkts P gesehen, dieser Bereich fortlaufend.

Der jeweilige Eintritt der Ringdüse 4.1, 4.2, 4.3 ist von dem in das innere Gehäuse 7 außenseits radial eingreifenden Verteilerring 9 umschlossen, der, über seinen Umfang verteilt, eine Vielzahl von vorzugsweise gleichmäßig voneinander beabstandeten Ringbohrungen 9a aufweist, die jeweils die Ringdüse 4.1, 4.2, 4.3 mit dem zweiten Beaufschlagungsraum 3 verbinden. Dadurch wird eine möglichst gleichmäßige Verteilung des dampfförmigen Wärmeträgers D innerhalb der jeweils zugeordneten Ringdüse erreicht.

Um eine gleichmäßige Verteilung des dampfförmigen Wärmeträgers D vom äußeren Ringraum 3.3 des zweiten Beaufschlagungsraumes 3 auf die parallel angeschlossenen Ringdüsen 4.1, 4.2 und 4.3 sicherzustellen, ist, in Strömungsrichtung des dampfförmigen Wärmeträgers D gesehen und vor dessen Eintritt in den zweiten Beaufschlagungsraum 3, in dem sich an den zweiten Einlass 6.4 anschließenden konusförmigen Erweiterungsstutzen 6.5 ein Leitblech 8 mit einer Vielzahl siebförmig angeordneter Verteilerbohrungen 8a vorgesehen, das den Durchtrittsquerschnitt des Erweiterungsstutzens 6.5 fast vollständig ausfüllt. Das Leitblech 8 ist dabei vorzugsweise V-förmig gefaltet und die Faltkante verläuft vorzugsweise in der Ebene des größten Durchmessers des konusförmigen Erweiterungsstutzens 6.5.

### BEZUGSZEICHENLISTE DER VERWENDETEN ABKÜRZUNGEN

- 1*: einstufiger Injektor
- 1: mehrstufiger Injektor

- 2: erster Beaufschlagungsraum (Produkt)
- 2.1: zylindrischer erster Eintrittsraum
- 2.2: Eintrittskammer
- 2.3: innerer erster Ringraum

- 2.4: Mischraum (ringkanalförmig)
- 2.4.1: innerer zweiter Ringraum
- 2.4.2: innerer dritter Ringraum
- 2.4.3: Austrittskammer

- 2.5: zylindrischer Austrittsraum

- 3: zweiter Beaufschlagungsraum (Wasserdampf)
- 3.1: zylindrischer zweiter Eintrittsraum
- 3.2: konisch erweiterter Raum
- 3.3: äußerer Ringraum

- 4.1: erste Ringdüse
- 4.2: zweite Ringdüse
- 4.3: dritte Ringdüse

- 5: Dorn
- 5.1: Verdrängerkörper
- 5.2: Verstellstange
- 5.2a: Führungsstange
- 5.2b: Befestigungsstange

- 6: Injektorgehäuse
- 6a: Mantelteil

- 6b: Kragenteil

- 6.1: Eintrittsgehäuse
- 6.2: Deckel
- 6.3: erster Einlass
- 6.4: zweiter Einlass
- 6.5: Erweiterungsstutzen
- 6.6: Auslass
- 6.7: Rohrerweiterung

- 7: inneres Gehäuse
- 7.1: erster Gehäusering
- 7.2: zweiter Gehäusering
- 7.3: dritter Gehäusering
- 7.4: vierter Gehäusering

- 7.1a: ringförmige erste Nase
- 7.2a: ringförmige zweite Nase
- 7.3a: ringförmige dritte Nase

- 7.2b: umlaufende erste Anschrägung
- 7.3b: umlaufende zweite Anschrägung
- 7.4b: umlaufende dritte Anschrägung

- 8: Leitblech
- 8a: Verteilerbohrung

- 9: Verteilerring
- 9a: Ringbohrung

- 10: Laternengehäuse
- 11: Befestigungsteil
- 14: erster Spannring
- 15: zweiter Spannring
- 16: erste Spannbuchse
- 17: zweite Spannbuchse

- 18a: erste Gehäusedichtung
- 18b: zweite Gehäusedichtung
- 18c: dritte Gehäusedichtung
- 18d: vierte Gehäusedichtung
- 18e: fünfte Gehäusedichtung

- 19: Stangendichtung
- 20: Führungsring
- 21: Dichtung

- 100: Stellantrieb
- 200: Schwingungssensor

- 300: Steuereinheit
- 300a: Steuerprogramm

- D: dampfförmiger Wärmeträger (Wasserdampf; kulinarischer Sattdampf); zweites Arbeitsfluid
- D(E): Dampfeintritt

- P: flüssiges Produkt; erstes Arbeitsfluid
- P(E): Produkteintritt
- P(A): Produktaustritt

- T(D(E)): Eintrittstemperatur des dampfförmigen Wärmeträgers D
- T(P(A)): Austrittstemperatur des flüssigen Produkts P
- ΔT: Temperaturdifferenz (ΔT = T(D(E)) - T(P(A)))

- α: Neigungswinkel
- f: Schwingungsfrequenz

- p(D(E)): Eintrittsdruck des dampfförmigen Wärmeträgers D
- p(P(A)): Austrittsdruck des erhitzten flüssigen Produkts P
- Δp: Druckdifferenz (Δp = p(D(E)) - p(P(A)))

- v: Verstellbewegung

## Patentansprüche

1. Verfahren mit einem Injektor zum Einleiten eines dampfförmigen Wärmeträgers in ein flüssiges Produkt, insbesondere in ein Nahrungsmittel oder Getränk, bei dem der dampfförmige Wärmeträger (D) das flüssige Produkt (P) zur Bildung eines keimfreien Produkts erhitzt, bei dem das Strömen
(a) entweder des dampfförmigen Wärmeträgers (D) durch Druckabfall hervorgerufen wird, der durch die Geschwindigkeit des flüssigen Produkts (P) entsteht, oder
(b) des flüssigen Produkts (P) durch Druckabfall hervorgerufen wird, der durch die Geschwindigkeit des dampfförmigen Wärmeträgers (D) entsteht,
und bei dem das aus dem flüssigen Produkt (P) und dem dampfförmigen Wärmeträger (D) bestehende Zweiphasengemisch wenigstens einen sich in einer gemeinsamen Strömungsrichtung erstreckenden ringkanalförmigen Mischraum durchströmt und dieser wenigstens eine Mischraum zwischen einem Gehäuse des Injektors und einem dornförmig ausgebildeten Verdrängerkörper, der in Strömungsrichtung axial verschiebbar ist, gebildet ist, wobei eine Verschiebung des Verdrängerkörpers in Strömungsrichtung eine Reduzierung und eine Verschiebung entgegen der Strömungsrichtung eine Vergrößerung der Durchtrittsquerschnitte des Mischraums bewirkt,
**dadurch gekennzeichnet,**
**dass** wenigstens
• eine von der Strömung im Injektor erzeugte und erzwungenen Schwingungsfrequenz (f) des gesamten Injektors oder eines ausgewählten Teiles desselben oder
• eine Temperaturdifferenz (ΔT) zwischen der Eintrittstemperatur des dampfförmigen Wärmeträgers T(D(E)) am Eintritt in den und der Austrittstemperatur des erhitzten flüssigen Produkts T(P(A)) am Austritt aus dem Injektor oder
• eine Druckdifferenz (Δp) zwischen dem Eintrittsdruck des dampfförmigen Wärmeträgers p(D(E)) am Eintritt in den und dem Austrittsdruck des erhitzten flüssigen Produkts p(P(A)) am Austritt aus dem Injektor erfasst wird,
und **dass** in Abhängigkeit von einer oder mehreren dieser physikalischen Messgrößen eine automatisch gesteuerte axiale Verschiebung des Verdrängerkörpers in der Weise durchgeführt wird, dass die Wärmeübertragungsleistung von dem dampfförmigen Wärmeträger (D) in das flüssige Produkt (P) gleichbleibt.

2. Verfahren nach Anspruch 1,
**dadurch gekennzeichnet,**
**dass** sich die Erhitzung des flüssigen Produkts (P) durch den dampfförmigen Wärmeträger (D) in mehr als einem Mischraum, die in Strömungsrichtung in Reihe geschaltet sind, erfolgt.

3. Verfahren nach Anspruch 1 oder 2,
**dadurch gekennzeichnet,**
**dass** die automatisch gesteuerte Verschiebung des Verdrängerkörpers durchgeführt wird, wenn die Temperatur am Austritt aus einer dem Injektor, in Strömungsrichtung des Produkts (P) gesehen, nachgeordneten Heißhaltestrecke gegenüber der Austrittstemperatur des erhitzten flüssigen Produkts (P) am Austritt aus dem Injektor um eine vorgegebene zulässige Temperaturdifferenz überschritten ist.

4. Injektor zum Einleiten eines dampfförmigen Wärmeträgers in ein flüssiges Produkt, insbesondere ein Nahrungsmittel oder Getränk, zur Durchführung des Verfahrens nach einem der vorhergehenden Ansprüche, bei dem der dampfförmige Wärmeträger (D) das flüssige Produkt (P) zur Bildung eines keimfreien Produkts erhitzt und bei dem das Strömen des dampfförmigen Wärmeträgers (D) durch Druckabfall hervorgerufen wird, der durch die Geschwindigkeit des flüssigen Produkts (P) entsteht, mit einem Injektorgehäuse (6), das einen ersten Einlass (6.3) für das flüssige Produkt (P) und einen zweiten Einlass (6.4) für den dampfförmigen Wärmeträger (D) aufweist, mit einem im Injektorgehäuse (6) einen Auslass (6.6) aufweisenden ersten Beaufschlagungsraum (2), der eintrittsseitig düsenförmig ausgebildet und mit dem ersten Einlass (6.3) verbunden ist, mit einem ringkanalförmigen Mischraum (2.4), der Teil des ersten Beaufschlagungsraumes (2) ist und der zwischen einem rotationssymmetrischen, in axialer Richtung verschieblichen Verdrängerkörper (5.1) einerseits und einem letzteren umschließenden ringförmigen inneren Gehäuse (7) andererseits gebildet wird, mit einem zwischen dem inneren Gehäuse (7) und dem dieses umschließenden Injektorgehäuse (6) gebildeten ringförmigen zweiten Beaufschlagungsraum (3), der mit dem zweiten Einlass (6.4) verbunden ist, mit wenigstens einer Ringdüse (4.1, 4.2, 4.3, ...), die, in Strömungsrichtung des flüssigen Produkts (P) gesehen, bei Mehrfachanordnung im Abstand hintereinander angeordnet, jeweils vom dampfförmigen Wärmeträger (D) beaufschlagbar, im oder am inneren Gehäuse (7) ausgebildet und mit dem zweiten Beaufschlagungsraum (3) verbunden ist/sind und die von der Seite des umschließenden inneren Gehäuses (7) in den Mischraum (2.4) einmündet/einmünden, und mit einem motorisch verstellbaren Verdrängerkörper (5.1),
**dadurch gekennzeichnet,**
• **dass** der Verdrängerkörper (5.1) über eine Verstellstange (5.2) mit einem Stellantrieb (100) verbunden ist,
• **dass** eine Steuereinheit (300) vorgesehen ist, in der die physikalischen Messgrößen Schwingungsfrequenz (f), Temperaturdifferenz (ΔT) und Druckdifferenz (Δp) gespeichert werden und in der ein Steuerprogramm (300a) hinterlegt ist,
• und **dass** die Steuereinheit (300) über den Stellantrieb (100) eine axiale Verstellbewegung (v) der Verstellstange (5.2) nach Vorgabe durch das Steuerprogramm (300a) und in Abhängigkeit von einer oder mehreren der physikalischen Messgrößen (f; ΔT; Δp) vornimmt.

5. Injektor nach Anspruch 4,
**dadurch gekennzeichnet,**
**dass** unmittelbar oder mittelbar am Injektorgehäuse (6) ein Schwingungssensor (200) angeordnet ist.

6. Injektor nach Anspruch 5,
**dadurch gekennzeichnet,**
**dass** der Schwingungssensor (200) in unmittelbarer oder mittelbarer Verbindung zur Verstellstange (5.2) steht.

7. Injektor nach einem der Ansprüche 4 bis 6,
**dadurch gekennzeichnet,**
**dass** produktberührte Bauteile des Injektors (1*; 1) aus Polyether Ether Ketone (PEEK) bestehen.

## Claims

1. A method with an injector for introducing a vaporous heat carrier into a liquid product, in particular into a food product or beverage, in which the vaporous heat carrier (D) heats the liquid product (P) in order to form a germ-free product, in which the flow
(a) of either the vaporous heat carrier (D) is generated by a decrease in pressure, which occurs due to the speed of the liquid product (P), or
(b) the liquid product (P) is generated by a decrease in pressure, which occurs due to the speed of the vaporous heat carrier (D),
and in which the two-phase mixture consisting of the liquid product (P) and the vaporous heat carrier (D) flows through at least one mixing chamber extending in a joint direction of flow and having an annular-channel shape, and said at least one mixing chamber being formed between a housing of the injector and a spiniform displacement body which is axially movable in the direction of flow, wherein a movement of the displacement body in the direction of flow causes a reduction in, and a movement against the direction of flow produces an increase in, the passage cross-sections of the mixing chamber,
**characterized in that**
at least
• an oscillation frequency (f) of the injector as a whole or of a selected part of the same produced and forced by the flow in the injector, or
• a temperature difference (ΔT) between the inlet temperature of the vaporous heat carrier T(D(E)) at the inlet into the injector and the outlet temperature of the heated liquid product T(P(A)) at the outlet from the injector, or
• a pressure difference (Δp) between the inlet pressure of the vaporous heat carrier p(D(E)) at the inlet into the injector and the outlet pressure of the heated liquid product p(P(A)) at the outlet from the injector is detected,
and that depending on one or more of these physical measurement variables, an automatically controlled axial movement of the displacement body is effected in such a way that the heat transfer capacity from the vaporous heat carrier (D) into the liquid product (P) remains the same.

2. The method according to Claim 1,
**characterized in that**
heating of the liquid product (P) by the vaporous heat carrier (D) takes place in more than one mixing chamber which are connected in series in the direction of flow.

3. The method according to Claim 1 or 2,
**characterized in that**
the automatically controlled movement of the displacement body is performed if the temperature at the outlet from a heat-retaining path subordinate to the injector, seen in the direction of flow of the product (P), is exceeded with respect to the outlet temperature of the heated liquid product (P) at the outlet from the injector by a predefined permissible temperature difference.

4. An injector for introducing a vaporous heat carrier into a liquid product, in particular a food product or beverage, for carrying out the method according to any one of the preceding claims, in which the vaporous heat carrier (D) heats the liquid product (P) in order to form a germ-free product and in which the flow of the vaporous heat carrier (D) is generated by a decrease in pressure, which occurs due to speed of the liquid product (P), having an injector housing (6) which has a first inlet (6.3) for the liquid product (P) and a second inlet (6.4) for the vaporous heat carrier (D), having a first pressurization space (2) having an outlet (6.6) in the injector housing (6), which first pressurization space is designed in a nozzle-like manner on the inlet sides and is connected with the first inlet (6.3), having a mixing chamber (2.4) that has an annular-channel shape which is part of the first pressurization space (2) and which is formed between a rotationally symmetrical displacement body (5.1) moveable in the axial direction on the one hand and an annular inner housing (7) surrounding the displacement body on the other hand, having an annular second pressurization space (3) formed between the inner housing (7) and the injector housing (6) surrounding the inner housing, which second pressurization space is connected with the second inlet (6.4), having at least one ring nozzle (4.1, 4.2, 4.3, ...) which, seen in the direction of flow of the liquid product (P), is/are arranged at a distance behind one another in a multiple arrangement, is/are respectively pressurizable by the vaporous heat carrier (D), is/are designed in or on the inner housing (7) and is/are connected with the second pressurization space (3) and which flow(s) into the mixing chamber (2.4) from the side of the inner housing (7) surrounding the mixing chamber, and having a displacement body (5.1) that can be moved in a motor-driven manner,
**characterized in that**
• the displacement body (5.1) is connected with an actuating drive (100) via an adjusting rod (5.2),
• a control unit (300) is provided, in which the physical measurement variables oscillation frequency (f), temperature difference (AT) and pressure difference (Δp) are stored and in which a control program (300a) is stored,
• and the control unit (300) via the actuating drive (100) performs an axial adjustment movement (v) of the adjusting rod (5.2) according to specifications by the control program (300a) and depending on one or more of the physical measurement variables (f; ΔT; Δp).

5. The injector according to Claim 4,
**characterized in that**
an oscillation sensor (200) is arranged directly or indirectly on the injector housing (6).

6. The injector according to Claim 5,
**characterized in that**
the oscillation sensor (200) is connected directly or indirectly with the adjusting rod (5.2).

7. The injector according to any one of Claims 4 to 6,
**characterized in that**
components of the injector (1*; 1) coming in contact with the product are made of polyether ether ketone (PEEK).

## Revendications

1. Procédé et injecteur servant à introduire un fluide caloporteur sous forme de vapeur dans un produit liquide, en particulier dans un produit alimentaire ou une boisson, dans lequel le fluide caloporteur sous forme de vapeur (D) chauffe le produit liquide (P) pour former un produit stérilisé, dans lequel
(a) soit le flux de fluide caloporteur sous forme de vapeur (D) est généré par une chute de pression causée par la vitesse du produit liquide (P), soit
(b) le flux de produit liquide (P) est généré par une chute de pression causée par la vitesse du fluide caloporteur sous forme de vapeur (D),
et dans lequel le mélange biphase constitué du produit liquide (P) et du fluide caloporteur sous forme de vapeur (D) s'écoule au moins à travers une chambre de mélange en forme de canal annulaire s'étendant dans une direction d'écoulement commune, et cette au moins une chambre de mélange est formée entre un boîtier de l'injecteur et un corps de refoulement conçu en forme d'épine, lequel est déplaçable axialement dans la direction d'écoulement, où un déplacement du corps de refoulement dans la direction d'écoulement provoque une réduction des sections transversales de passage de la chambre de mélange, et où un déplacement contre la direction d'écoulement provoque une augmentation de celles-ci,
**caractérisé par**
la détection d'au moins
• une fréquence d'oscillation (f) forcée et produite par le flux dans l'injecteur de l'ensemble de l'injecteur ou d'une partie sélectionnée de celui-ci, ou
• une différence de température (ΔT) entre la température d'entrée du fluide caloporteur sous forme de vapeur T(D(E)) à l'entrée dans l'injecteur et la température de sortie du produit liquide chauffé T(P(A)) à la sortie de celui-ci, ou
• une différence de pression (Δp) entre la pression d'entrée du fluide caloporteur sous forme de vapeur p(D(E)) à l'entrée dans l'injecteur et la pression de sortie du produit liquide chauffé p(P(A)) à la sortie de celui-ci,
et en ce que selon une ou plusieurs de ces grandeurs de mesure physiques, un déplacement axial commandé automatiquement du corps de refoulement est effectué de telle façon, que la capacité de transfert thermique du fluide caloporteur sous forme de vapeur (D) vers le produit liquide (P) demeure inchangée.

2. Procédé selon la revendication 1,
**caractérisé en ce que**
le chauffage du produit liquide (P) par le fluide caloporteur sous forme de vapeur (D) est effectué dans plusieurs chambres de mélange, lesquelles sont raccordées en série dans la direction d'écoulement.

3. Procédé selon la revendication 1 ou 2,
**caractérisé en ce que**
le déplacement commandé automatiquement du corps de refoulement est effectué lorsque la température à la sortie hors d'un segment de maintien au chaud prévu en aval de l'injecteur, vu dans la direction d'écoulement du produit (P), est supérieure à la température de sortie du produit liquide chauffé (P) à la sortie hors de l'injecteur, selon une différence de température autorisée prédéfinie.

4. Injecteur servant à introduire un fluide caloporteur sous forme de vapeur dans un produit liquide, en particulier un produit alimentaire ou une boisson, pour l'exécution du procédé selon l'une des revendications précédentes, dans lequel le fluide caloporteur sous forme de vapeur (D) chauffe le produit liquide (P) pour former un produit stérilisé, et dans lequel le flux du fluide caloporteur sous forme de vapeur (D) est généré par une chute de pression causée par la vitesse du produit liquide (P), avec un boîtier d'injecteur (6) présentant une première admission (6.3) pour le produit liquide (P) et une deuxième admission (6.4) pour le fluide caloporteur sous forme de vapeur (D), avec une première chambre de sollicitation (2) présentant une évacuation (6.6) dans le boîtier d'injecteur (6), laquelle est conçue en forme de buse côté entrée et à laquelle est reliée la première admission (6.3), avec une chambre de mélange (2.4) en forme de canal annulaire, laquelle fait partie de la première chambre de sollicitation (2) tout en étant formée entre un corps de refoulement (5.1) symétrique en rotation et déplaçable dans la direction axiale d'une part, et un boîtier intérieur annulaire (7) entourant ce dernier d'autre part, avec une deuxième chambre de sollicitation annulaire (3) formée entre le boîtier intérieur (7) et le boîtier d'injecteur (6) entourant celui-ci, laquelle est reliée à la deuxième admission (6.4), avec au moins une buse annulaire (4.1, 4.2, 4.3, ...), laquelle/lesquelles, vue(s) dans la direction d'écoulement du produit liquide (P), est/sont disposées les unes derrière les autres de façon espacée dans un agencement multiple, apte(s) à être sollicitée(s) respectivement par le fluide caloporteur sous forme de vapeur (D), formée(s) dans ou sur le boîtier intérieur (7) et reliée(s) à la deuxième chambre de sollicitation (3), et laquelle/lesquelles débouche/débouchent dans la chambre de mélange (2.4) par le côté du boîtier intérieur enveloppant (7), et avec un corps de refoulement (5.1) réglable de façon motorisée,
**caractérisé en ce que**
• le corps de refoulement (5.1) est relié à un actionneur (100) par le biais d'une tige de réglage (5.2),
• **en ce qu'**il est prévu une unité de commande (300) dans laquelle sont stockées les grandeurs de mesures physiques telles que la fréquence d'oscillation (f), la différence de température (ΔT) et la différence de pression (Δp), et dans laquelle est enregistré un programme de commande (300a),
• et **en ce que** l'unité de commande (300) produit un mouvement de réglage axial (v) de la tige de réglage (5.2) par le biais de l'actionneur (100) conformément au programme de commande (300a) et en fonction d'une ou de plusieurs de grandeurs de mesure physiques (f ; ΔT ; Δp).

5. Injecteur selon la revendication 4,
**caractérisé en ce que**
un capteur d'oscillation (200) est disposé directement ou indirectement sur le boîtier d'injecteur (6).

6. Injecteur selon la revendication 5,
**caractérisé en ce que**
le capteur d'oscillation (200) est relié directement ou indirectement à la tige de réglage (5.2).

7. Injecteur selon l'une des revendications 4 à 6,
**caractérisé en ce que**
des composants de l'injecteur (1* ; 1) en contact avec le produit sont constitués de polyéther-éther-cétone (PEEK).
